# EUROPEAN PATENT APPLICATION

(11) **EP 4 851 515 A1**
(43) Date of publication of application: **09.12.2026**
(21) Application number: 26181314.1
(22) Date of filing: 27.05.2026
(51) Int. Cl.: F16L 53/38, F16L 41/02, F16L 55/07

(54) **HEATING PIPE**

(30) Priority: 05.06.2025 KR 20250073835
(71) Applicant: Global Standard Technology Co., Ltd., Hwaseong-si, Gyeonggi-do 18487 (KR)
(72) Inventor: KIM, Jin Nam, 17748 Pyeongtaek-si (KR); CHOI, Chan Woo, 18148 Osan-si (KR); KIM, Hye Sun, 17095 Yongin-si (KR); CHOI, Hyun Kyoo, 18906 Hwaseong-si (KR)
(74) Representative: v. Bezold & Partner Patentanwälte - PartG mbB

(57) **Abstract**

Proposed is a heating pipe used in semiconductor process piping and gas treatment facilities, the heating pipe having a gas supply module for mitigating powder accumulation and clogging in a sensor port to which a pressure sensor is mounted. The heating pipe includes a pipe having a sensor port, and a heat generating part coupled to an outer circumferential surface of the pipe to heat the pipe. The heating pipe further includes a cooling gas channel having a ring shape surrounding an upper outer circumferential surface of the sensor port, and configured such that a conditioning gas flows therethrough to cool the sensor port, a gas heating part configured to heat the conditioning gas discharged from the cooling gas channel, and a supply tube connecting an outlet of the cooling gas channel and an inlet of the buffer chamber.

## Description

### CROSS REFERENCE TO RELATED APPLICATION

The present application claims priority to Korean Patent Application No. 10-2025-0073835, filed June 05, 2025, the entire contents of which are incorporated herein for all purposes by this reference.

### BACKGROUND

### Technical Field

The present disclosure relates to a heating pipe used in semiconductor process piping or similar gas treatment facilities and, more particularly, to a heating pipe provided with a gas supply module for mitigating powder accumulation and clogging in a sensor port to which a pressure sensor or the like is mounted.

### Description of the Related Art

In semiconductor and display process piping, high-temperature precursors like SiH₄, WF₆, NH₃, and Cl₂ rapidly cool as they exit the chamber. When the inner wall temperature of the piping falls below approximately 205 °C, vapor-phase byproducts such as silica, ammonium salts, and metal fluorides condense and accumulate on the inner walls in the form of crystalline solid powder. As a result, the pipe cross-sectional area is reduced, and scrubbers and pumps may stop operating, thereby interrupting facility operation.

In particular, since a pressure transmitter (PT) sensor port protrudes perpendicular to a main pipe, the gas flow tends to stagnate therein, causing powders to adhere and accumulate inside the sensor port. This may result in pressure signal errors, sensor malfunction, and blockage of the port. Deposits collected from the sensor port mainly consist of SiO₂, B₂O₃, and NH₄Cl, and may cause corrosion and toxicity issues during cleaning operations.

As an attempt to solve these problems, Korean Patent No. 10-2248241 discloses a piping kit including a heating pipe having a ceramic pipe provided with a PT sensor port and a heating coil wound around the ceramic pipe. The piping kit prevents clogging of the sensor port by supplying heated nitrogen gas to the PT sensor port through a micro gas supply tube connected thereto.

However, the temperature of a PT sensor installed in the PT sensor port may excessively increase due to the heated gas supplied to the sensor port, which may lead to malfunction of the PT sensor.

As a method for remedying such problems, Korean Patent No. 10-2646563 discloses a technology for cooling a PT sensor port by introducing a refrigerant gas into a cylindrical housing mounted on the sensor port.

However, since the purpose of the invention is focused on preventing overheating of the PT sensor, it has a limitation in that powder adhesion inside the sensor port cannot be actively eliminated or prevented. That is, because a refrigerant gas at room temperature or low temperature is continuously supplied to cool a sensor, thermal uniformity inside the sensor port deteriorates, thereby increasing the risk of powder condensation and deposition.

### Document of Related Art

(Patent Document 1) Korean Patent No. 10-2248241 (May 06, 2021)
(Patent Document 2) Korean Patent No. 10-2646563 (March 13, 2024)
(Patent Document 3) Korean Patent No. 10-2109330 (May 12, 2020)
(Patent Document 4) Korean Patent No. 10-2143515 (August 11, 2020)

### SUMMARY

Accordingly, the present disclosure has been made keeping in mind the above problems occurring in the related art, and the present disclosure is intended to provide a heating pipe configured to mitigate powder accumulation by injecting heated gas into a lower portion of a sensor port while cooling an upper portion of the sensor port, thereby also preventing malfunction of a sensor element.

In order to achieve the above objectives, according to an embodiment of the present disclosure, there is provided a heating pipe including: a pipe provided with a sensor port; and a heat generating part coupled to an outer circumferential surface of the pipe to heat the pipe, the heating pipe further including: a cooling gas channel having a ring shape surrounding an upper outer circumferential surface of the sensor port, provided with an inlet through which a conditioning gas is introduced and an outlet through which the conditioning gas is discharged, and configured such that the conditioning gas flows therethrough to cool the sensor port; a gas heating part provided with a buffer chamber surrounding a lower outer circumferential surface of the sensor port, a plurality of microchannels communicating with the buffer chamber and extending toward the cooling gas channel, and an inner shell disposed to surround the sensor port with a predetermined gap from an outer circumferential surface of the sensor port, wherein an annular flow path communicating with the microchannels and through which the conditioning gas discharged from the microchannels flows is formed between an inner circumferential surface of the inner shell and the outer circumferential surface of the sensor port, and the conditioning gas discharged from the cooling gas channel is heated by heat from the heat generating part; and a supply tube connecting the outlet of the cooling gas channel and an inlet of the buffer chamber, and configured to transfer the conditioning gas preheated in the cooling gas channel to the buffer chamber, wherein at least one injection slit may be formed in the sensor port surrounded by the gas heating part, through which the conditioning gas flowing along the annular flow path is injected.

In addition, the microchannels may be arranged at equal angular intervals.

In addition, a plurality of notches may be provided at an upper end of the inner shell to evenly distribute the conditioning gas that has risen through the microchannels into the annular flow path.

In addition, the heat generating part may include a pattern sheet and a heating wire fixed to the pattern sheet by sewing.

In addition, a pattern indicating a layout path of the heating wire may be marked on the pattern sheet.

In addition, the conditioning gas may be nitrogen.

In addition, the gas heating part may include an outer shell surrounding the inner shell, and a plurality of channel grooves may be provided on at least one of an outer circumferential surface of the inner shell and an inner circumferential surface of the outer shell so that the microchannels are formed between the inner shell and the outer shell when the inner shell and the outer shell are coupled to each other.

The heating pipe according to the present disclosure can mitigate powder accumulation on the inner wall of the sensor port. In addition, malfunction of the sensor element due to heat can be prevented by cooling an upper portion of the sensor port.

Furthermore, the heating and gas supply structure provided at the lower portion of the sensor port and the cooling structure provided at the upper portion of the sensor port are integrated into a single flow path, thereby simplifying the overall structure and enabling easy application to various process lines.

In addition, reduction of powder accumulation extends pipe cleaning and replacement cycles, thereby improving equipment operational efficiency.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a perspective view of a heating pipe according to an embodiment of the present disclosure;
FIG. 2 is a perspective view of a pipe shown in FIG. 1;
FIG. 3 is a plan view of the pipe shown in FIG. 1;
FIG. 4 is a cross-sectional view taken along line A-A of FIG. 3;
FIG. 5 is a cross-sectional view taken along line B-B of FIG. 3;
FIG. 6 is a cutaway perspective view of a first gas heating part shown in FIG. 2;
FIG. 7 is a perspective view of a second gas heating part shown in FIG. 2;

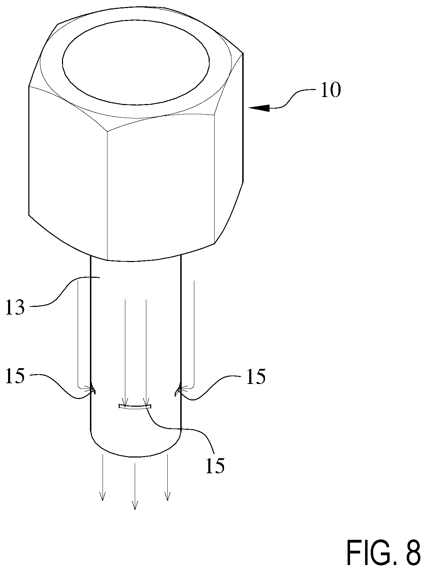

FIG. 8 is a perspective view of a sensor port shown in FIG. 2;
FIG. 9 is a view showing a heat generating part of FIG. 1; and
FIG. 10 is a view showing simulation results of temperature distribution at respective positions of the heating pipe shown in FIG. 1.

### DETAILED DESCRIPTION

Hereinafter, embodiments of the present disclosure will be described in detail with reference to the accompanying drawings. However, the embodiments of the present disclosure may be modified in various other forms, and the scope of the present disclosure should not be construed as being limited to the embodiments described below. The embodiments of the present disclosure are provided to more fully explain the present disclosure to those having ordinary skill in the art. Accordingly, the shapes and the like of elements in the drawings are exaggerated for clearer illustration, and elements denoted by the same reference numerals in the drawings indicate the same elements.

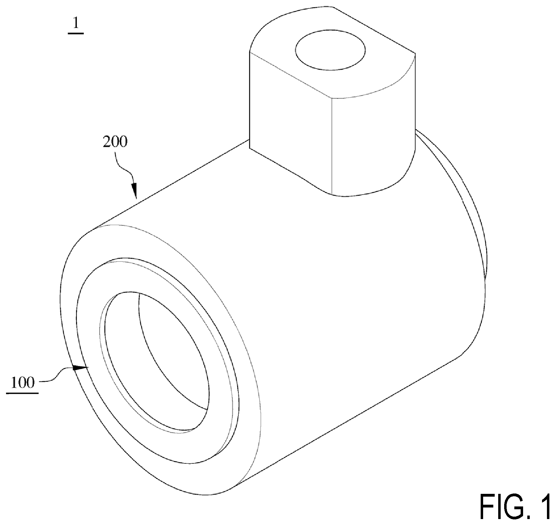

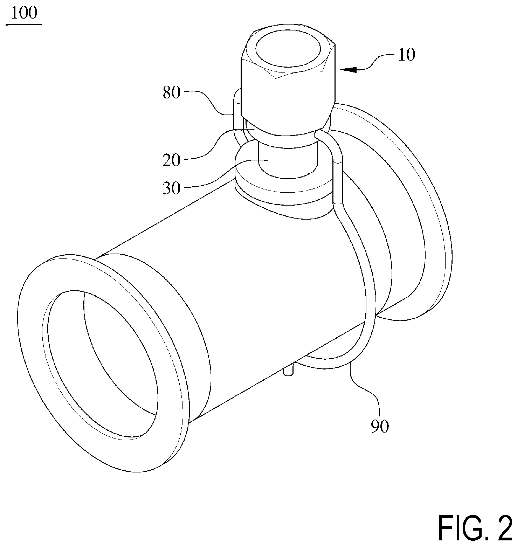

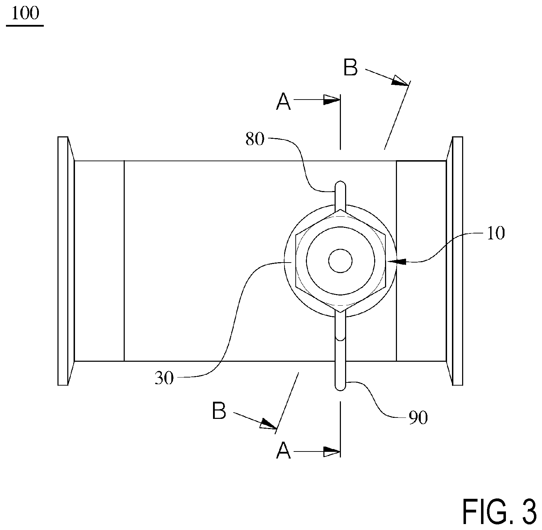

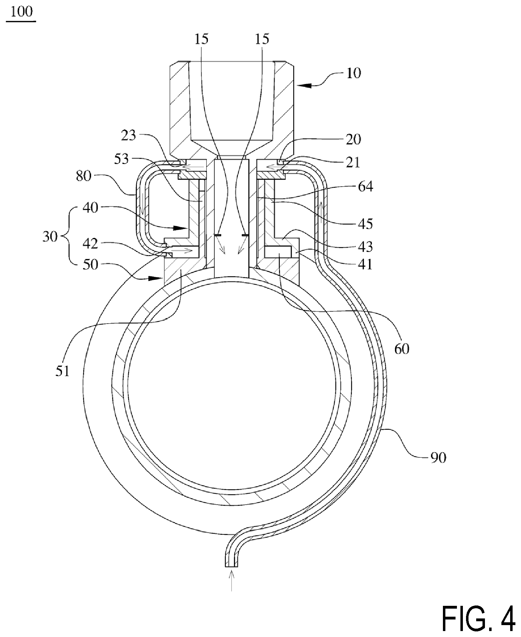

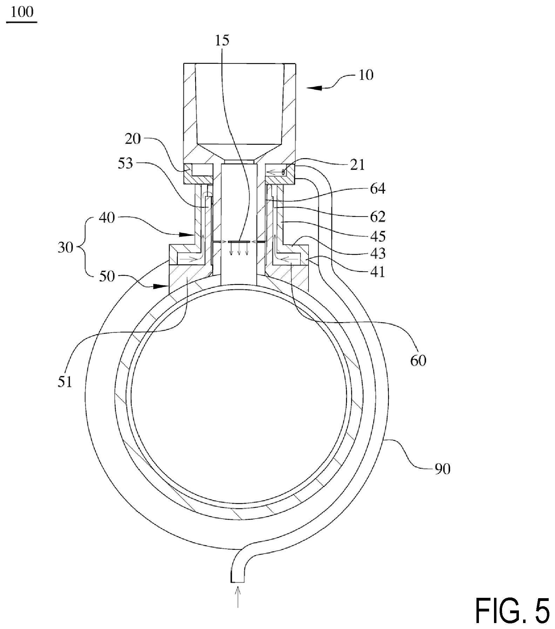

FIG. 1 is a perspective view of a heating pipe according to an embodiment of the present disclosure; FIG. 2 is a perspective view of a pipe shown in FIG. 1; FIG. 3 is a plan view of the pipe shown in FIG. 1; FIG. 4 is a cross-sectional view taken along line A-A of FIG. 3; and FIG. 5 is a cross-sectional view taken along line B-B of FIG. 3.

As shown in FIG. 1, a heating pipe 1 according to an embodiment of the present disclosure includes a pipe 100 through which exhaust gas and the like pass, and a heat generating part 200 configured to heat the outer circumferential surface of the pipe.

As shown in FIGS. 1 to 5, the pipe 100 includes a sensor port 10 protruding in a direction perpendicular to the longitudinal direction of the pipe 100. A pressure sensor module (not shown) or the like is mounted on the sensor port 10.

In addition, the heating pipe 1 includes a multi-stage conditioning flow path part including a cooling gas channel 20, a gas heating part 30, and a supply tube 80 connecting the cooling gas channel 20 and the gas heating part 30. The heating pipe 1 is configured such that the cooling gas channel 20, the gas heating part 30, and the supply tube 80 form an integrally continuous flow path, thereby enabling cooling of the sensor port 10 for protection of the sensor module, heating of the sensor port 10 for prevention of powder adhesion, and gas injection functions to be realized by a single conditioning gas flowing continuously therethrough.

The cooling gas channel 20 has an annular ring shape surrounding the upper outer circumferential surface of the sensor port 10 by 360°. The cooling gas channel 20 serves to prevent overheating of the sensor module installed on the sensor port 10, which may otherwise reduce measurement accuracy. The cooling gas channel 20 also serves to preheat the conditioning gas. That is, within the cooling gas channel 20, a heat recovery process is performed in which cooling of the sensor port 10 and preheating of the conditioning gas are simultaneously achieved.

The inner circumferential surface of the cooling gas channel 20 may or may not be in direct contact with the outer circumferential surface of the sensor port 10. When a gap is present, a thermal conductive material may be provided to fill the gap for heat transfer.

The cooling gas channel 20 is provided with an inlet 21 through which a conditioning gas is introduced and an outlet 23 through which the conditioning gas is discharged. The inlet 21 is connected to a conditioning gas supply line 90. As the conditioning gas, nitrogen gas at room temperature may be used, for example. The conditioning gas introduced through the inlet 21 of the cooling gas channel 20 flows along the annular space inside the cooling gas channel 20 in a swirling manner, thereby cooling the upper portion of the sensor port 10. The conditioning gas that has absorbed heat is discharged through the outlet 23 of the cooling gas channel 20 and then transferred to the gas heating part 30 via the supply tube 80.

The gas heating part 30 forms a flow path in which the conditioning gas is heated. The gas heating part 30 includes a buffer chamber 60, microchannels 62, and an inner shell 53. The heat generating part 200 for heating the conditioning gas passing through the gas heating part 30 may be provided around the gas heating part 30.

The buffer chamber 60 has a generally circular ring shape and surrounds the lower outer circumference of the sensor port 10 by 360°. The buffer chamber 60 provides an internal space in which the conditioning gas, preheated in the cooling gas channel 20, is further heated by heat transfer from the heat generating part 200. In addition, the buffer chamber 60 may temporarily reduce the flow velocity of the conditioning gas introduced through the supply tube 80, thereby equalizing temperature and pressure and preventing flow deviation.

The microchannels 62 extend vertically from the upper surface of the buffer chamber 60 toward the cooling gas channel 20. The microchannels 62 have a thin, elongated rectangular plate shape that is slightly curved in the width direction. The microchannels 62 have the same length and curvature. The microchannels 62 are arranged at equal angular intervals. In the present embodiment, the microchannels are illustrated as being arranged at 45° intervals. However, the microchannels 62 may also be arranged at different angular intervals. The microchannels 62 serve to evenly divide the conditioning gas from the buffer chamber 60. The conditioning gas homogenized in the buffer chamber 60 is equally distributed and flows through the microchannels 62. The upper ends of the microchannels 62 may be sealed, for example, by the lower surface of the cooling gas channel 20.

The gas heating part 30 includes a first gas heating part 40 and a second gas heating part 50. By the coupling of the first gas heating part 40 and the second gas heating part 50, the buffer chamber 60 and the microchannels 62 of the gas heating part 30 may be formed.

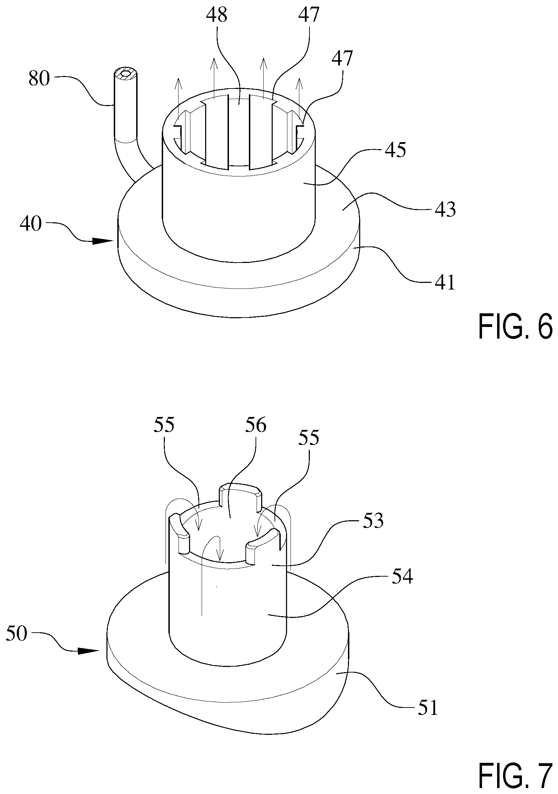

As shown in FIGS. 4 to 6, the first gas heating part 40 may include, for example, a cylinder 41, an annular plate 43, and an outer shell 45. The outer shell 45 has a generally cylindrical shape. The annular plate 43 is coupled on top of the cylinder 41, and the outer shell 45 is coupled on top of the annular plate 43. The cylinder 41 is provided with a conditioning gas inlet 42 connected to the supply tube 80. Channel grooves for configuring the microchannels are formed on the inner circumferential surface of the outer shell 45.

As shown in FIGS. 4, 5, and 7, the second gas heating part 50 may include, for example, a flange 51 and the inner shell 53. The inner shell 53 is coupled on top of the flange 51. The inner shell 53 has a generally cylindrical shape. Rectangular notches 55 are formed at regular intervals at the upper end of the inner shell 53.

The first gas heating part 40 and the second gas heating part 50 may be assembled by placing the cylinder 41 of the first gas heating part 40 on the flange 51 of the second gas heating part 50 such that the inner shell 53 of the second gas heating part 50 is fitted inside the outer shell 45 of the first gas heating part 40. As the first gas heating part 40 and the second gas heating part 50 are assembled, the lower end of the cylinder 41 is sealed by the flange 51, and an outer circumferential surface 54 of the inner shell 53 comes into contact with an inner circumferential surface 48 of the outer shell 45.

When assembled in this manner, the buffer chamber 60 is formed, which is enclosed by the cylinder 41 and the annular plate 43 of the first gas heating part 40, and the flange 51 and the inner shell 53 of the second gas heating part 50. In addition, microchannels are formed between the outer circumferential surface 54 of the inner shell 53 and the inner circumferential surface 48 of the outer shell 45. That is, channel grooves 47 on the inner circumferential surface 48 of the outer shell 45 become the microchannels 62. The microchannels may also be formed by configuring channel grooves on the outer circumferential surface of the inner shell.

In addition, an annular flow path 64 is formed between the inner circumferential surface 56 of the inner shell 53 and the outer circumferential surface 13 of the sensor port 10, through which the conditioning gas passing through the microchannels 62 and the notches 55 at the upper end of the inner shell 53 flows. The annular flow path 64 guides the high-temperature conditioning gas toward the lower side (buffer chamber side).

At least one injection slit 15 is formed in the sensor port 10 surrounded by the inner shell 53, through which the conditioning gas flowing along the annular flow path 64 is injected. The conditioning gas injected at high speed through the injection slit 15 flows along the inner surface of the sensor port 10 and removes residual substances and particles by sweeping the residual substances and particles into the main flow of the pipe 100. In this manner, powder deposition is prevented.

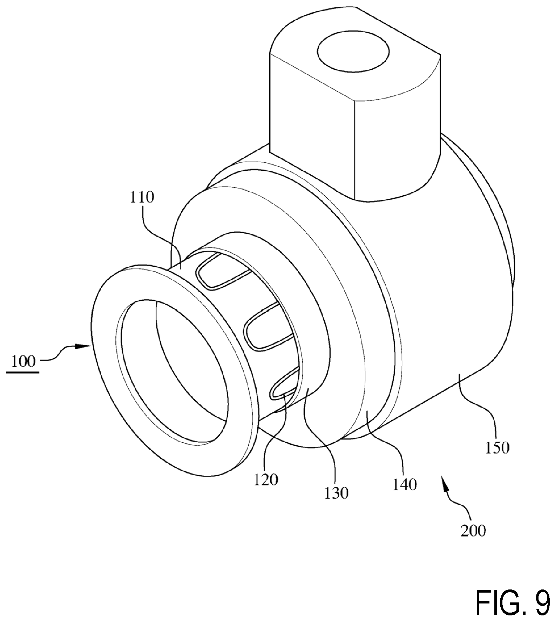

FIG. 9 is a view showing a heat generating part of FIG. 1.

As shown in FIG. 9, the heat generating part 200 includes an adhesive 110, a heating wire 120, a pattern sheet 130, a heat insulating material 140, and a finishing material 150.

The adhesive 110 serves to attach the heat generating part 200 to the pipe 100.

The heating wire 120 may be fixed to the pattern sheet 130 by a sewing method. A pattern indicating a layout position of the heating wire 120 is formed on the pattern sheet 130. In this way, the heating wire 120 is first fixed to the pattern sheet 130, and then the pattern sheet 130 is bonded to the pipe 100 using the adhesive 110, thereby enabling the heating wire 120 to be easily attached to the pipe 100.

As the heat insulating material 140, a silica mat or the like may be used.

As the finishing material 150, polytetrafluoroethylene (PTFE) may be used.

Hereinafter, the operation of the above-described heating pipe will be described.

The conditioning gas at room temperature is introduced into the inlet 21 of the cooling gas channel 20 through the conditioning gas supply line 90.

The conditioning gas circulates through the cooling gas channel 20, cooling the upper portion of the sensor port 10 and absorbing heat, thereby being preheated to approximately 70-90 °C.

The preheated conditioning gas is transferred through the supply tube 80 to the buffer chamber 60 located at the lower portion of the sensor port 10.

In the buffer chamber 60, the preheated conditioning gas is leveled in terms of pressure and temperature, and the instantaneous flow velocity of the gas is reduced.

The conditioning gas is evenly distributed into the microchannels 62, and is rapidly heated to 150-180 °C by the heat generating part disposed around the gas heating part 30.

The conditioning gas is evenly introduced into the inlet of the annular flow path 64 through the notches 55 formed at the upper end of the inner shell 53. The conditioning gas is further heated to a temperature range of 180-230 °C.

The additionally heated conditioning gas is injected into the interior of the sensor port 10 through the radial injection slits 15 formed in the sensor port 10 at the lower end of the annular flow path 64.

The conditioning gas sweeps along the inner wall of the sensor port 10, thereby suppressing nucleation of particulate deposits such as SiO₂, NH₄, and Cl species, and dislodging existing deposits.

The injected conditioning gas then merges with the main exhaust gas flow in the pipe 100 and is discharged toward a scrubber.

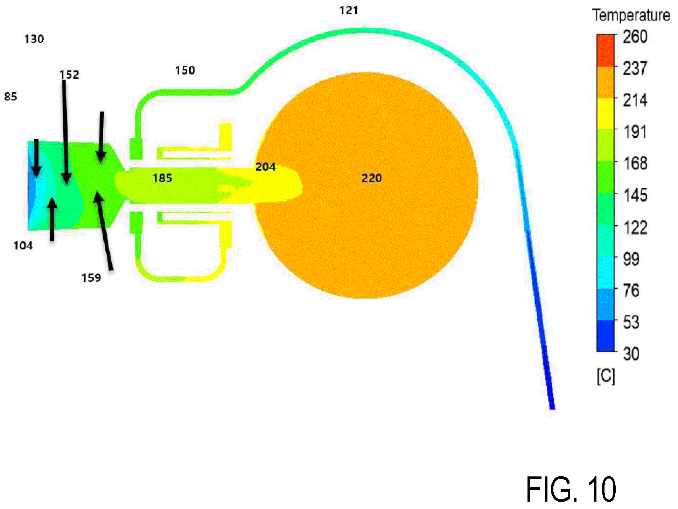

FIG. 10 is a view showing simulation results of temperature distribution at respective positions of the heating pipe shown in FIG. 1. As shown in FIG. 10, the interior of the pipe is maintained at 205 °C or higher to prevent powder deposition, and the portion of the sensor port where the sensor module is installed is maintained at 90 °C or lower (68 °C in FIG. 10) to prevent malfunction of the sensor module.

Although preferred embodiments of the present disclosure have been illustrated and described above, the present disclosure is not limited to the specific embodiments described above, and various modifications may be made by those skilled in the art without departing from the scope of the present disclosure as defined in the claims. Such modifications should not be individually understood as departing from the technical spirit or scope of the present disclosure.

## Claims

1. A heating pipe comprising:
a pipe provided with a sensor port; and
a heat generating part coupled to an outer circumferential surface of the pipe to heat the pipe,
wherein the heating pipe further comprises:
a cooling gas channel having a ring shape surrounding an upper outer circumferential surface of the sensor port, provided with an inlet through which a conditioning gas is introduced and an outlet through which the conditioning gas is discharged, and configured such that the conditioning gas flows therethrough to cool the sensor port;
a gas heating part provided with a buffer chamber surrounding a lower outer circumferential surface of the sensor port, a plurality of microchannels communicating with the buffer chamber and extending toward the cooling gas channel, and an inner shell disposed to surround the sensor port with a predetermined gap from an outer circumferential surface of the sensor port, wherein an annular flow path communicating with the microchannels and through which the conditioning gas discharged from the microchannels flows is formed between an inner circumferential surface of the inner shell and the outer circumferential surface of the sensor port, and the conditioning gas discharged from the cooling gas channel is heated by heat from the heat generating part; and
a supply tube connecting the outlet of the cooling gas channel and an inlet of the buffer chamber, and configured to transfer the conditioning gas preheated in the cooling gas channel to the buffer chamber,
wherein at least one injection slit is formed in the sensor port surrounded by the gas heating part, through which the conditioning gas flowing along the annular flow path is injected.

2. The heating pipe of claim 1, wherein the microchannels are arranged at equal angular intervals.

3. The heating pipe of claim 1, wherein a plurality of notches is provided at an upper end of the inner shell to evenly distribute the conditioning gas that has risen through the microchannels into the annular flow path.

4. The heating pipe of claim 1, wherein the heat generating part includes a pattern sheet and a heating wire fixed to the pattern sheet by sewing.

5. The heating pipe of claim 4, wherein a pattern indicating a layout path of the heating wire is marked on the pattern sheet.

6. The heating pipe of claim 1, wherein the conditioning gas is nitrogen.

7. The heating pipe of claim 1, wherein the gas heating part includes an outer shell surrounding the inner shell, and
a plurality of channel grooves is provided on at least one of an outer circumferential surface of the inner shell and an inner circumferential surface of the outer shell so that the microchannels are formed between the inner shell and the outer shell when the inner shell and the outer shell are coupled to each other.
